# EUROPÄISCHE PATENTSCHRIFT

(11) **EP 1 371 952 B1**
(45) Veröffentlichungstag und Bekanntmachung des Hinweises auf die Patenterteilung: **15.06.2011**
(21) Anmeldenummer: 03008677.1
(22) Anmeldetag: 16.04.2003
(51) Int. Cl.: G01D 11/24, B60R 19/48

(54) **Sensorhalter**
Sensor holder
Support de capteur

(30) Priorität: 13.06.2002 DE 10226267
(43) Veröffentlichungstag der Anmeldung: 17.12.2003
(73) Patentinhaber: Valeo Schalter und Sensoren GmbH, 74321 Bietigheim-Bissingen (DE)
(72) Erfinder: Kupfernagel, Uwe, 71665 Vaihingen (DE); Gotzig, Heinrich, Dr., 74081 Heilbronn (DE)
(74) Vertreter: Pothmann, Karsten

(56) Entgegenhaltungen:
- EP-A- 0 982 196
- EP-A- 1 083 099
- DE-A- 19 939 747
- DE-A1- 3 812 182

## Beschreibung

Die Erfindung betrifft einen Sensorhalter mit einem Aufnahmeabschnitt für einen Ultraschallsensor und einem Übergangsabschnitt zur Anordnung an einem Fahrzeug, insbesondere an einem Stoßfänger eines Kraftfahrzeugs. Die Erfindung betrifft außerdem eine Ultraschallsensoreinheit mit einem Ultraschallsensor und einem Sensorhalter.

Die in einem Sensorhalter aufgenommenen Ultraschallsensoren werden verwendet, um das Einparken von Fahrzeugen zu erleichtern, indem Hindernisse in der Umgebung des Fahrzeuges erfasst werden. Nähert sich das Fahrzeug einem erfassten Hindernis über einen Grenzabstand hinaus, wird dem Fahrer des Fahrzeugs über optische oder akustische Anzeigen mitgeteilt, dass ein Grenzabstand unterschritten wurde.

Während des Betriebs sendet der Ultraschallsensor mittels schwingenden Elementen Ultraschallwellen aus, die an einem Hindernis reflektiert und vom Ultraschallsensor wieder empfangen werden können. Beim Empfang induziert die auf den Ultraschallsensor treffende Druckwelle nach dem Prinzip der Piezoelektrizität eine elektrische Spannung im schwingenden Element.

Üblicherweise werden die Ultraschallsensoren von Sensorhaltern aufgenommen, die in entsprechende Sichtflächen des Fahrzeugs integriert werden. Allgemein üblich ist die Verwendung von trichterförmigen Haltern, die an den Stoßfängern des Fahrzeugs fixiert sind. Bei den existierenden Haltern hat es sich als nachteilig erwiesen, dass die Abstrahl- und Empfangscharakteristik des Ultraschallsensors von den Sensorhaltern und insbesondere von den trichterförmigen Übergangsabschnitten relativ stark beeinflusst wird. Darüber hinaus benötigen die bekannten Halter relativ viel Bauraum und weisen Lichtkanten auf, die verhindern, dass der Halter unauffällig in umgebende Flächen integriert werden kann.

Beispiele für vorstehend beschriebene Ultraschallsensoren sind aus der DE 38 12 182 A1 und der DE 199 39 747 A1 bekannt.

Hiervon ausgehend ist es Aufgabe der vorliegenden Erfindung einen möglichst kompakten Sensorhalter bereitzustellen, der einen geringen Einfluss auf die Abstrahl- und Empfangscharakteristik hat und sich unauffällig in umgebende Flächen integrieren lässt.

Diese Aufgabe wird bei einem Sensorhalter der eingangs beschriebenen Art erfindungsgemäß dadurch gelöst, dass der Übergangsabschnitt in allen Schnittebenen durch die Längsachse des Sensorhalters eine gekrümmte Oberfläche aufweist, die sich von dem Aufnahmeabschnitt bis hin zum Fahrzeug erstreckt. Die Oberfläche des Übergangsabschnitts ist zusätzlich zur Stirnfläche des Ultraschallsensors nach außen hin sichtbar und beeinflusst die Abstrahlungs- und Empfangscharakteristik des Ultraschallsensors. Ihrer vorteilhaften Gestaltung kommt daher eine große Bedeutung zu.

Die Ausgestaltung der Übergangsabschnitte verschiedener Schnittebenen durch die Längsachse des Sensorhalters ergibt sich aus verschiedenen, sich teilweise widersprechenden Anforderungen. Einerseits müssen die Sensoren in einem bestimmten Abstand zur Aufstandsfläche des Fahrzeugbodens, in einer bestimmten Verteilung entlang der Fahrzeugfront und des Fahrzeughecks und außerdem in einer bestimmten Orientierung angeordnet werden, andererseits sind die Ultraschallsensoren möglichst unauffällig in die das Design des Fahrzeugs stark prägenden Außenteile wie Stoßfänger oder Kotflügel zu integrieren. Aus diesen Anforderungen ergibt sich, dass einzelne Oberflächenabschnitte verschiedenartig gestaltet sein können, um allen Anforderungen möglichst gut gerecht zu werden. Es erweist sich aber als besonders vorteilhaft für die Abstrahl- und Empfangscharakteristik des Ultraschallsensors, dass der Übergangsabschnitt in allen Schnittebenen durch die Längsachse des Sensorhalters eine sich von dem Aufnahmeabschnitt des Sensorhalters bis hin zum Fahrzeug erstreckende gekrümmte Oberfläche aufweist.

Es hat sich herausgestellt, dass die Krümmung der Oberfläche des Übergangsabschnitts gegenüber gerade ausgebildeten Oberflächenabschnitten von bekannten trichterförmigen Haltern eine besonders vorteilhafte Abstrahl- und Empfangscharakteristik des Ultraschallsensors bewirkt. Die bei den herkömmlich gestalteten trichterförmigen Haltern mit gerader Oberfläche in störendem Maße auftretenden Phänomene wie Beugung und Interferenz von abgestrahlten und empfangenen Ultraschallwellen können durch die erfindungsgemäße Krümmung der Oberfläche nachweislich eingeschränkt werden. Daraus resultiert eine gegenüber dem Stand der Technik verbesserte Ortung von Hindernissen. Beispielsweise können tatsächlich vorhandene Hindernisse zuverlässiger erkannt werden.

Darüber hinaus hat die vorgeschlagene Erfindung den Vorteil, dass die Ultraschallsensoren besonders unauffällig in Sichtflächen des Fahrzeugs integriert werden können. Durch die gekrümmte Oberfläche des Übergangsbereichs wird vermieden, dass Lichtkanten den optischen Eindruck, der durch die Stoßfänger erzeugt wird, stören. Bei dem heutzutage besonders beliebten flächigen Design der nach außen sichtbaren Teile eines Kraftfahrzeugs ist es insbesondere bei der benötigten Vielzahl von Ultraschallsensoren vorteilhaft, wenn diese mit optisch fließenden Übergängen integriert werden können. Dies wird durch die vorgeschlagenen gekrümmten Oberflächen besonders gut erreicht.

Erfindungsgemäß wird auf abrupte und kantige Übergänge zwischen Ultraschallsensor und Stoßfänger gänzlich verzichtet. Die zitierten Phänomene der Beugung und Interferenz werden minimiert, wobei die Sensoren sich optisch unauffällig in das Fahrzeugdesign integrieren lassen. Darüber hinaus kann der Außendurchmesser des Sensorhalters in Abhängigkeit der gewählten Krümmungsgeometrie kleiner ausgebildet sein als bei aus dem Stand der Technik bekannten trichterförmigen Haltern mit geraden Oberflächenabschnitten.

Nach einer Weiterbildung der Erfindung weist der Übergangsabschnitt trichterförmig ausgebildete Oberflächenabschnitte auf, wobei der Übergangsabschnitt in wenigstens einer Schnittebene und vorzugsweise in allen Schnittebenen durch die Längsachse des Sensorhalters eine sich von dem Aufnahmeabschnitt des Sensorhalters bis hin zum Fahrzeug erstreckende gekrümmte Oberfläche aufweist, wodurch die bereits beschriebenen Vorteile besonders deutlich zum Tragen kommen.

Nach einer möglichen Ausführungsform können wenigstens ein Oberflächenabschnitt des Aufnahmeabschnitts und der daran angrenzende Oberflächenabschnitt des Übergangsabschnitts fluchtend, d.h. ohne eine Kante zu bilden, ineinander übergehen. Durch ein derartiges tangentiales Angrenzen wird ein fließender Übergang zwischen dem den Ultraschallsensor umgebenden Aufnahmeabschnitt und dem angrenzenden Übergangsabschnitt erreicht.

Nach einer weiteren Ausführungsform können wenigstens ein Oberflächenabschnitt des Übergangsabschnitts und ein daran angrenzender Stirnflächenabschnitt des Ultraschallsensors fluchtend ineinander übergehen. Somit wird durch den Stirnflächenabschnitt und den angrenzenden Oberflächenabschnitt des Übergangsabschnitts eine optisch vorteilhafte durchgehende Fläche gebildet.

Es erweist sich als besonders vorteilhaft, dass wenigstens ein Oberflächenabschnitt des Übergangsabschnitts und der daran angrenzende Oberflächenabschnitt des Fahrzeugs, insbesondere des Stoßfängers, fluchtend ineinander übergehen. Durch den tangentialen Übergang zur Oberfläche des Stoßfängers werden die akustischen Effekte wie Beugung und Interferenz minimiert. Es hat sich außerdem herausgestellt, dass unterschiedliche Einbauhöhen von gekrümmten Übergangsabschnitten einen geringeren Einfluss auf die Sende- und Empfangscharakteristik des Ultraschallsensors haben. Dies ist im Hinblick auf den verringerten Arbeitsaufwand zur Kalibrierung von im wesentlichen baugleichen Sensoren mit unterschiedlichen Einbauhöhen vorteilhaft.

Durch den tangentialen Übergang von Übergangsabschnitt und Stoßfänger wird die Erzeugung von Lichtkanten verhindert und die für einen Betrachter sichtbare Größe des Sensorhalters verkleinert. Außerdem kann der Außendurchmesser des Sensorhalters in Abhängigkeit der gewählten Krümmungsgeometrie kleiner als bei aus dem Stand der Technik bekannten trichterförmigen Haltern mit geraden Oberflächenabschnitten ausgebildet sein.

Nach einer bevorzugten Ausführungsform der Erfindung ist der Aufnahmeabschnitt zylinderförmig und insbesondere kreiszylinderförmig ausgebildet. Die für Einparkhilfen verwendeten Ultraschallsensoren sind üblicherweise zylinderförmig ausgebildet und können durch dazu passende gestaltete Aufnahmeabschnitte des Sensorhalters zuverlässig und sicher gehalten werden.

Nach einer möglichen Ausgestaltung der Erfindung weist der Übergangsabschnitt im Schnitt durch die Längsachse des Sensorhalters eine kreisbogenförmig oder kegelschnittförmig ausgebildete Oberfläche auf. Nach einer weiteren Ausgestaltung der Erfindung weist der Übergangsabschnitt im Schnitt durch die Längsachse des Sensorhalters eine durch eine Exponentialfunktion beschreibbare Oberfläche auf.

Die Auswahl der Krümmungsgeometrie kann empirisch durch Messungen am Fahrzeug oder an einem Modell ermittelt werden. Es bietet sich an, die Sende- und Empfangsvorgänge durch entsprechende Simulationen auf einem Rechner abzubilden, um den Aufwand zur Erzeugung von Sensorhaltern mit entsprechend verschiedenartig gekrümmten Oberflächenabschnitten zu minimieren. Es hat sich herausgestellt, dass kreisbogenförmige, elliptische oder parabelförmige Oberflächenkrümmungen geeignet sind, die Sende- und Empfangscharakteristik der Ultraschallsensoren positiv zu beeinflussen. Besonders vorteilhaft sind kreisbogenförmige Oberflächen, da sie in Vorderansicht auf die Oberfläche den geringsten Flächenverbrauch aufweisen.

Sehr gute Eigenschaften weisen traktrixförmige Oberflächenkrümmungen auf.

Welche der vorgeschlagenen Krümmungsformen für einen bestimmten Anwendungsfall besonders vorteilhaft ist, kann durch Versuche oder Simulationen ermittelt werden.

Für eine besonders unauffällige Integration des Sensorhalters kann es vorteilhaft sein, dass der Übergangsabschnitt im Schnitt durch die Längsachse des Sensorhalters verschiedenartig gekrümmte Oberflächenabschnitte aufweist, die kontinuierlich ineinander übergehen. Dabei können bereits erwähnte Grundformen wie Kreis-, Ellipsen-, Parabel- oder Traktrixabschnitte miteinander kombiniert werden, wobei die Steigungen in einem Übergang zweier aneinander grenzender Grundformen identisch sind.

Vorteilhafterweise hat der Übergangsabschnitt unabhängig von der gewählten Krümmungsgeometrie eine geschlossene Oberfläche. Somit können durch die den Sensorhalter umgebende Flächen, beispielsweise eines Stoßfängers, durch die Oberflächen der Übergangsabschnitte und durch die Stirnfläche des Ultraschallsensors eine ununterbrochene Fläche erzeugt werden. Dies ist einerseits aus optischen Gründen wünschenswert und hat andererseits den Vorteil, dass ein Eindringen von Medien wie Spritzwasser aus dem Außenbereich des Fahrzeugs in innenliegende Bereiche des Ultraschallsensors vermieden wird.

Nach einer Ausführungsform der Erfindung sind der Aufnahmeabschnitt und der Übergangsabschnitt des Sensorhalters konzentrisch zueinander angeordnet. Nach einer alternativen Ausführungsform weisen der Aufnahmeabschnitt und der Übergangsabschnitt zueinander versetzte und/oder sich schneidende zentrische Achsen auf. Die Anordnung der Achsen zueinander ist abhängig von eingangs erwähnten Faktoren wie Einbaulage und - orientierung der Ultraschallsensoren. Bei konzentrischer Anordnung ist eine gegebenenfalls erwünschte Symmetrie erzeugbar. Die zueinander versetzte oder sich schneidende Anordnung der Achsen kann sich aus technischen Bedingungen wie vorhandener Bauraum oder zu erfassendes Sensorumfeld ergeben.

Vorteilhafterweise ist der Sensorhalter aus Kunststoff gebildet. Durch die Verwendung von Kunststoff können auf einfache Art und Weise leichte Bauteile mit sauberen Oberflächen erzeugt werden, die beispielsweise in der Farbe des Stoßfängers durchgefärbt oder überlackierbar sind. Außerdem sind die Sensorhalter im Spritzgießverfahren preisgünstig herstellbar.

Die Erfindung betrifft auch eine Ultraschallsensoreinheit mit einem Ultraschallsensor und einem erfindungsgemäßen Sensorhalter, wobei der Ultraschallsensor in dem Sensorhalter angeordnet werden kann. Es bietet sich aus logistischen Gründen an, die für eine Einparkhilfe benötigten Komponenten zu entsprechenden Einheiten zusammenzufassen. Somit kann beispielsweise ein Ultraschallsensor in einem Sensorhalter angeordnet, das heißt eingeschoben und/oder fixiert werden und die somit gebildete Ultraschallsensoreinheit als Baugruppe einer Vormontage beispielsweise eines Stoßfängers zugeführt werden.

Vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

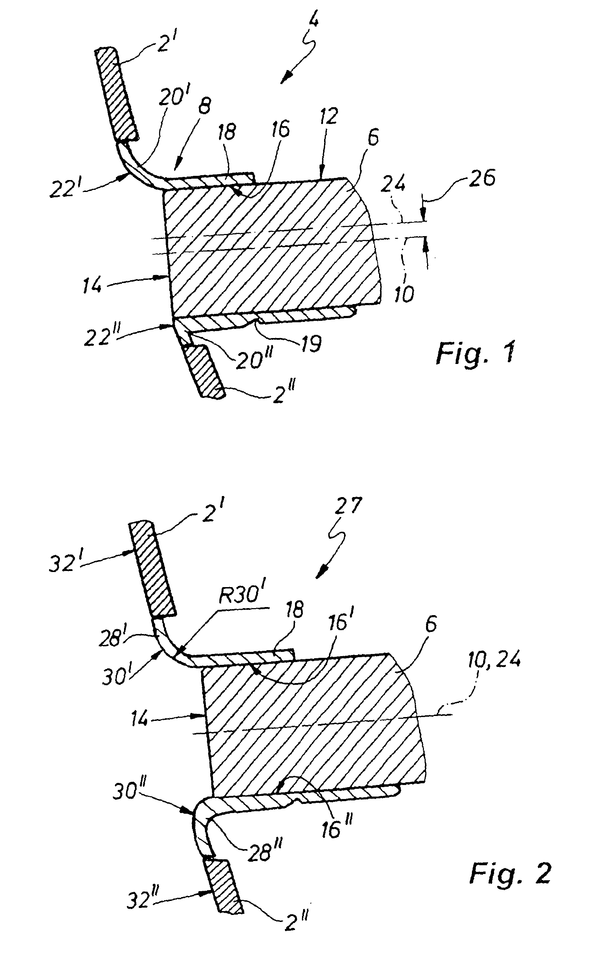

Figuren 1 bis 4 zeigen Längsschnitte durch erfindungsgemäße Sensorhalter in vier verschiedenen Ausführungsformen.

Figur 1 zeigt einen Längsschnitt durch einen erfindungsgemäßen Sensorhalter 8 in einer ersten Ausführungsform. Dargestellt sind Stoßfängerabschnitte 2', 2" eines Kraftfahrzeugs mit einer darin angeordneten Sensoreinheit 4 aus einem Ultraschallsensor 6 und einem Sensorhalter 8. Der Ultraschallsensor 6 ist zylindrisch ausgebildet und weist eine zentrische Sensorlängsachse 10 und eine zylindrische Sensoraußenfläche 12 auf. Der Ultraschallsensor 6 weist eine in Richtung der Fahrzeugaußenseite weisende kreisförmige Stirnfläche 14 auf, die Ultraschallsignale sendet und empfängt. Die zylindrisch Sensoraußenfläche 12 liegt bereichsweise an einer Innenfläche 16 eines ebenfalls zylindrisch ausgebildeten Aufnahmeabschnitts 18 des Sensorhalters 8 an. Über im Aufnahmeabschnitt 18 angeordnete Aussparungen 19 kann der Sensorhalter 8 mit dem darin aufgenommenen Ultraschallsensor 6 in nicht dargestellte Rastmittel, beispielsweise schnappend, eingesetzt und fixiert werden.

Der Sensorhalter 8 weist Übergangsabschnitte 20', 20" auf, die an den Stoßfängerabschnitten 2', 2'' grenzen. Der Übergangsabschnitt 20' weist einen gekrümmten Oberflächenabschnitt 22' auf, der sich vom Aufnahmeabschnitt 18 bis hin zum Stoßfängerabschnitt 2' erstreckt. Durch den gekrümmten Oberflächenabschnitt 22' wird die Abstrahl- und Empfangscharakteristik des Ultraschallsensors 6 positiv beeinflusst.

Der Sensorhalter 8 gemäß Fig. 1 weist eine zentrische Halterlängsachse 24 auf, die um den Versatz 26 zur zentrischen Sensorlängsachse 10 beabstandet ist. Denkbar wäre auch, dass die beiden Achsen 10 und 24 nicht parallel zueinander verlaufen und/oder einen Schnittpunkt aufweisen. Durch den Versatz 26 entsteht eine Asymmetrie, durch die der Übergangsabschnitt 20'' verglichen mit dem Übergangsabschnitt 20' und dessen Oberflächenabschnitt 22' einen relativ kleinen Oberflächenabschnitt 22'' aufweist. Der Oberflächenabschnitt 22'' grenzt auf der einen Seite an der Stirnfläche 14 des Ultraschallsensors 6 und auf der anderen Seite an dem Stoßfängerabschnitt 2''. Die Abmessungen der einzelnen Übergangsabschnitte 20', 20", sowie weiteren Übergangsabschnitte in nicht dargestellten Längsschnittebenen liegenden Übergangsabschnitten ergeben sich aus verschiedenen, sich teilweise widersprechenden Anforderungen. Einerseits müssen die Sensoren in einem bestimmten Abstand zur Aufstandsfläche des Fahrzeugbodens, in einer bestimmten Verteilung entlang der Fahrzeugfront und des Fahrzeughecks und außerdem in einer bestimmten Orientierung angeordnet werden, andererseits sind die Ultraschallsensoren möglichst unauffällig in die das Design des Fahrzeugs stark prägenden Stoßfänger zu integrieren. Aus diesen Anforderungen ergibt sich, dass einzelne Oberflächenabschnitte, wie zum Beispiel die Oberflächenabschnitte 22' und 22", verschiedenartig gestaltet sein können, um allen Anforderungen möglichst gut gerecht zu werden.

Figur 2 zeigt einen Längsschnitt durch einen erfindungsgemäßen Sensorhalter 27 in einer zweiten Ausführungsform. Der Ultraschallsensor 6 ist konzentrisch zum Sensorhalter 27 angeordnet und wird von einem Aufnahmeabschnitt 18 gehalten. Der Sensorhalter 27 ist in Stoßfängerabschnitten 2', 2'' eines Kraftfahrzeugs angeordnet. Durch die konzentrische Anordnung von Ultraschallsensor 6 und Sensorhalter 27 befinden sich die Sensorlängsachse 10 des Ultraschallsensors 6 und die Halterlängsachse 24 in Deckungslage.

Der Sensorhalter 27 weist Übergangsabschnitte 28', 28" auf, die sich von der Stirnfläche 14 des Ultraschallsensors 6 bis zu den Stoßfängerabschnitten 2', 2" des Fahrzeugs erstrecken. Die Übergangsabschnitte 28', 28'' weisen Oberflächenabschnitte 30' und 30'' auf, die verschiedenartig gekrümmt sind. Der Oberflächenabschnitt 30' grenzt auf der zur Halterlängsachse 24 gewandten Seite fluchtend an einer Innenfläche 16' des Aufnahmeabschnitts 18 und auf der zum Stoßfängerabschnitt 2' gewandten Seite fluchtend an dessen Sichtseite 32'. Der Oberflächenabschnitt 30' verläuft kreisbogenförmig und weist einen Radius R30' auf. Der Oberflächenabschnitt 30'' grenzt auf der zur Halterlängsachse 24 gewandten Seite fluchtend an einer Innenfläche 16'' des Aufnahmeabschnitts 18 und auf der zum Stoßfängerabschnitt 2'' gewandten Seite fluchtend an dessen Sichtseite 32". Der Oberflächenabschnitt 30'' weist einen durch eine Exponentialfunktion beschreibbaren parabelförmigen Verlauf auf. Der in Fig. 2 dargestellte Sensorhalter weist über die Oberflächenabschnitte 30' und 30'' hinaus in allen Schnittebenen gekrümmte Oberflächenabschnitte auf.

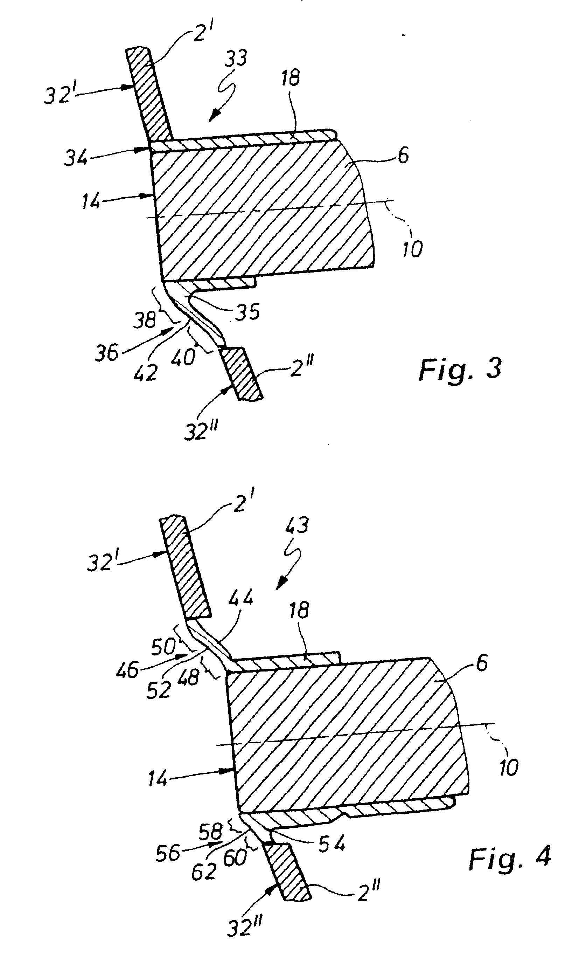

Figur 3 zeigt einen Längsschnitt durch einen erfindungsgemäßen Sensorhalter 33 in einer dritten Ausführungsform. Die zwischen dem Ultraschallsensor 6 und den Stoßfängerabschnitten 2' bzw. 2'' gebildeten Übergänge sind verschiedenartig gestaltet. Ein erster Übergang ist gebildet, indem sich der zylindrische Aufnahmeabschnitt 18 in einem Stirnflächenabschnitt 34 bis zur Sichtseite 32' des Stoßfängerabschnitts 2' erstreckt. Somit sind die Stirnfläche 14 des Ultraschallsensors 6, der Stirnflächenabschnitt 34 und die Sichtseite 32' des Stoßfängerabschnitts 2' strakbündig zueinander angeordnet.

Ein zweiter Übergang ist gebildet, indem sich der zylindrische Aufnahmeabschnitt 18 über einen Übergangsabschnitt 35 mit einem Oberflächenabschnitt 36 bis zur Sichtseite 32'' des Stoßfängerabschnitts 2'' erstreckt. Der Oberflächenabschnitt 36 grenzt auf der zur Sensorlängsachse 10 gewandten Seite fluchtend an der Stirnfläche 14 des Ultraschallsensors 6 und auf der zum Stoßfängerabschnitt 2'' gewandten Seite fluchtend an dessen Sichtseite 32''. Der Oberflächenabschnitt 36 weist einen konvex gewölbten Bereich 38 und einen konkav gekrümmten Bereich 40 auf. Die Bereiche 38 und 40 gehen am Wendepunkt 42 kontinuierlich ineinander über. Somit wird ein fließender Übergang beginnend von der Stirnfläche 14, über die Bereiche 38 und 40 des Oberflächenabschnitts 36 des Übergangsabschnitts 35 zur Sichtseite 32" des Stoßfängerabschnitts 2'' geschaffen.

Figur 4 zeigt einen Längsschnitt durch einen erfindungsgemäßen Sensorhalter 43 in einer vierten Ausführungsform. Die zwischen dem Ultraschallsensor 6 und den Stoßfängerabschnitten 2' bzw. 2'' gebildeten Übergänge sind verschiedenartig gestaltet. Ein erster Übergang ist gebildet, indem sich der zylindrische Aufnahmeabschnitt 18 über einen Übergangsabschnitt 44 mit einem Oberflächenabschnitt 46 bis zur Sichtseite 32' des Stoßfängerabschnitts 2' erstreckt. Der Oberflächenabschnitt 46 grenzt auf der zur Sensorlängsachse 10 gewandten Seite fluchtend an der Stirnfläche 14 des Ultraschallsensors 6 und auf der zum Stoßfängerabschnitt 2' gewandten Seite fluchtend an dessen Sichtseite 32'. Der Oberflächenabschnitt 46 weist einen konkav gekrümmten Bereich 48 und einen konkav gewölbten Bereich 50 auf. Die Bereiche 48 und 50 gehen am Wendepunkt 52 kontinuierlich ineinander über. Somit wird ein fließender Übergang beginnend von der Stirnfläche 14, über die Bereiche 48 und 50 des Oberflächenabschnitts 46 des Übergangsabschnitts 44 zur Sichtseite 32' des Stoßfängerabschnitts 2' geschaffen.

Ein zweiter Übergang ist gebildet, indem sich der zylindrische Aufnahmeabschnitt 18 über einen Übergangsabschnitt 54 mit einem Oberflächenabschnitt 56 bis zur Sichtseite 32'' des Stoßfängerabschnitts 2'' erstreckt. Der Oberflächenabschnitt 56 grenzt auf der zur Sensorlängsachse 10 gewandten Seite fluchtend an der Stirnfläche 14 des Ultraschallsensors 6 und auf der zum Stoßfängerabschnitt 2" gewandten Seite fluchtend an dessen Sichtseite 32''. Der Oberflächenabschnitt 56 weist einen konvex gewölbten Bereich 58 und einen konkav gekrümmten Bereich 60 auf. Die Bereiche 58 und 60 gehen am Wendepunkt 62 kontinuierlich ineinander über. Somit wird ein fließender Übergang beginnend von der Stirnfläche 14, über die Bereiche 58 und 60 des Oberflächenabschnitts 56 des Übergangsabschnitts 54 zur Sichtseite 32'' des Stoßfängerabschnitts 2" geschaffen.

Alle in der Beschreibung, den nachfolgenden Ansprüchen und der Zeichnung dargestellten Merkmale können sowohl einzeln, als auch in beliebiger Kombination miteinander erfindungswesentlich sein.

## Patentansprüche

1. Sensorhalter (8, 27, 33, 43) mit einem Aufnahmeabschnitt (18) für einen Ultraschallsensor (6)und einem Übergangsabschnitt (20', 20'', 28', 28'', 35, 44, 54) zur Anordnung an einem Fahrzeug, insbesondere an einem Stoßfänger (2', 2'') eines Kraftfahrzeugs, **dadurch gekennzeichnet, dass** der Übergangsabschnitt (20', 28', 28'', 35, 44, 54) in allen Schnittebenen durch die Längsachse (10) des Sensorhalters (8, 27, 33, 43) eine gekrümmte Oberfläche (22', 30', 30'', 36, 46, 56) aufweist, die sich von dem Aufnahmeabschnitt (18) bis hin zum Fahrzeug erstreckt.

2. Sensorhalter (8, 27, 43) nach Anspruch 1, **dadurch gekennzeichnet, dass** der Übergangsabschnitt (20', 28', 28'', 44) trichterförmig ausgebildete Oberflächenabschnitte (22', 30', 30'', 46) aufweist.

3. Sensorhalter (8, 27) nach einem der vorhergehenden Ansprüche, **dadurch gekennzeichnet, dass** wenigstens ein Oberflächenabschnitt des Aufnahmeabschnitts (18) und der daran angrenzende Oberflächenabschnitt (22', 30', 30'') des Übergangsabschnitts (20', 28', 28'') fluchtend ineinander übergehen.

4. Sensorhalter (8, 33, 43) nach einem der vorhergehenden Ansprüche, **dadurch gekennzeichnet, dass** wenigstens ein Oberflächenabschnitt (22'', 36, 46, 56) des Übergangsabschnitts (20'', 35, 44, 54) und ein daran angrenzender Stirnflächenabschnitt (14) des Ultraschallsensors (6) fluchtend ineinander übergehen.

5. Sensorhalter (8, 27, 33, 43) nach einem der vorhergehenden Ansprüche, **dadurch gekennzeichnet, dass** wenigstens ein Oberflächenabschnitt (22', 30', 30'', 36, 46, 56) des Übergangsabschnitts (20', 28', 28'', 35, 44, 54) und der daran angrenzende Oberflächenabschnitt des Fahrzeugs, insbesondere des Stoßfängers (2', 2''), fluchtend ineinander übergehen.

6. Sensorhalter (8, 27, 33, 43) nach einem der vorhergehenden Ansprüche, **dadurch gekennzeichnet, dass** der Aufnahmeabschnitt (18) zylinderförmig und insbesondere kreiszylinderförmig ausgebildet ist.

7. Sensorhalter (8, 27) nach einem der vorhergehenden Ansprüche, **dadurch gekennzeichnet, dass** der Übergangsabschnitt (20', 28', 28'') im Schnitt durch die Längsachse (10) des Sensorhalters (8, 27) eine kreisbogenförmig, kegelschnittförmig und/oder traktrixförmig ausgebildete Oberfläche (22', 30', 30'') aufweist.

8. Sensorhalter (27) nach einem der vorhergehenden Ansprüche, **dadurch gekennzeichnet, dass** der Übergangsabschnitt (28'') im Schnitt durch die Längsachse (10) des Sensorhalters (27) eine durch eine Exponentialfunktion beschreibbare Oberfläche (30'') aufweist.

9. Sensorhalter (33, 43) nach einem der vorhergehenden Ansprüche, **dadurch gekennzeichnet, dass** der Übergangsabschnitt (35, 44, 54) im Schnitt durch die Längsachse (10) des Sensorhalters (33, 43) verschiedenartig gekrümmte Oberflächenabschnitte (38 und 40, 48 und 50, 58 und 60) aufweist, die kontinuierlich ineinander übergehen.

10. Sensorhalter (8, 27, 33, 43) nach einem der vorhergehenden Ansprüche, **dadurch gekennzeichnet, dass** der Übergangsabschnitt (20', 20'', 28', 28'', 35, 44, 54) eine geschlossene Oberfläche (22', 22'', 30', 30'', 36, 46, 56) aufweist.

11. Sensorhalter (27) nach einem der vorhergehenden Ansprüche, **dadurch gekennzeichnet, dass** der Aufnahmeabschnitt (18) und der Übergangsabschnitt (28', 28'') konzentrisch zueinander angeordnet sind.

12. Sensorhalter (8) nach einem der Ansprüche 1 bis 10, **dadurch gekennzeichnet, dass** der Aufnahmeabschnitt (18) und der Übergangsabschnitt (20', 20'') zueinander versetzte und/oder sich schneidende zentrische Achsen (10, 24) aufweisen.

13. Sensorhalter (8, 27, 33, 43) nach einem der vorhergehenden Ansprüche, **dadurch gekennzeichnet, dass** der Sensorhalter (8, 27, 33, 43) aus Kunststoff gebildet ist.

14. Ultraschallsensoreinheit (4) mit einem Ultraschallsensor (6) und einem Sensorhalter (8, 27, 33, 43) nach einem der vorstehenden Ansprüche, wobei der Ultraschallsensor (6) in dem Sensorhalter (8, 27, 33, 43) angeordnet werden kann.

## Claims

1. Sensor holder (8, 27, 33, 43) having an accommodation section (18) for an ultrasound sensor (6) and a transition section (20', 20'', 28', 28'', 35, 44, 54) for arrangement on a vehicle, in particular on a bumper (2', 2'') of a motor vehicle, **characterized in that** the transition section (20', 28', 28'', 35, 44, 54) has a curved surface (22', 30', 30'', 36, 46, 56) in all the sectional planes through the longitudinal axis (10) of the sensor holder (8, 27, 33, 43), the said curved surface extending from the accommodation section (18) to the vehicle.

2. Sensor holder (8, 27, 43) according to Claim 1, **characterized in that** the transition section (20', 28'. 28", 44) has surface sections (22', 30', 30'', 46) which are in the form of a funnel.

3. Sensor holder (8, 27) according to either of the preceding claims, **characterized in that** at least one surface section of the accommodation section (18) and the adjoining surface section (22', 30', 30'') of the transition section (20', 28', 28'') merge with one another in an aligned manner.

4. Sensor holder (8, 33, 43) according to one of the preceding claims, **characterized in that** at least one surface section (22'', 36, 46, 56) of the transition section (20'', 35, 44, 54) and an adjoining end face section (14) of the ultrasound sensor (6) merge with one another in an aligned manner.

5. Sensor holder (8, 27, 33, 43) according to one of the preceding claims, **characterized in that** at least one surface section (22', 30', 30", 36, 46, 56) of the transition section (20', 28', 28", 35, 44, 54) and the adjoining surface section of the vehicle, in particular of the bumper (2', 2''), merge with one another in an aligned manner.

6. Sensor holder (8, 27, 33, 43) according to one of the preceding claims, **characterized in that** the accommodation section (18) is in the form of a cylinder, and in particular in the form of a circular cylinder.

7. Sensor holder (8, 27) according to one of the preceding claims, **characterized in that** the transition section (20', 28', 28''), in section through the longitudinal axis (10) of the sensor holder (8, 27), has a surface (22', 30', 30'') which is in the form of an arc of a circle, in the form of a section of a cone and/or in the form of a tractrix.

8. Sensor holder (27) according to one of the preceding claims, **characterized in that** the transition section (28"), in section through the longitudinal axis (10) of the sensor holder (27), has a surface (30'') which can describe an exponential function.

9. Sensor holder (33, 43) according to one of the preceding claims, **characterized in that** the transition section (35, 44, 54), in section through the longitudinal axis (10) of the sensor holder (33, 43), has surface sections (38 and 40, 48 and 50, 58 and 60) which are curved in different ways and merge with one another in a continuous manner.

10. Sensor holder (8, 27, 33, 43) according to one of the preceding claims, **characterized in that** the transition section (20', 20'', 28', 28'', 35, 44, 54) has a closed surface (22', 22", 30', 30", 36, 46, 56).

11. Sensor holder (27) according to one of the preceding claims, **characterized in that** the accommodation section (18) and the transition section (28', 28'') are arranged concentrically to one another.

12. Sensor holder (8) according to one of Claims 1 to 10, **characterized in that** the accommodation section (18) and the transition section (20', 20'') have central axes (10, 24) which are offset in relation to one another and/or intersect.

13. Sensor holder (8, 27, 33, 43) according to one of the preceding claims, **characterized in that** the sensor holder (8, 27, 33, 43) is formed from plastic.

14. Ultrasound sensor unit (4) having an ultrasound sensor (6) and a sensor holder (8, 27, 33, 43) according to one of the preceding claims, it being possible for the ultrasound sensor (6) to be arranged in the sensor holder (8, 27, 33, 43).

## Revendications

1. Porte-capteur (8, 27, 33, 43) comprenant une section d'accueil (18) pour un capteur à ultrasons (6) et une section de transition (20', 20", 28', 28", 35, 44, 54) en vue du montage sur un véhicule, notamment sur un pare-choc (2', 2") d'un véhicule automobile, **caractérisé en ce que** la section de transition (20', 28', 28", 35, 44, 54) présente dans tous les plans de coupe à travers l'axe longitudinal (10) du porte-capteur (8, 27, 33, 43) une surface curviligne (22', 30', 30", 36, 46, 56) qui s'étend de la section d'accueil (18) jusqu'au véhicule.

2. Porte-capteur (8, 27, 43) selon la revendication 1, **caractérisé en ce que** la section de transition (20', 28', 28", 44) présente des sections de surface (22', 30', 30", 46) configurées en forme d'entonnoir.

3. Porte-capteur (8, 27) selon l'une des revendications précédentes, **caractérisé en ce qu'**au moins une section de surface de la section d'accueil (18) et la section de surface (22', 30', 30") de la section de transition (20', 28', 28") qui lui est limitrophe se mêlent l'une dans l'autre dans l'alignement.

4. Porte-capteur (8, 33, 43) selon l'une des revendications précédentes, **caractérisé en ce qu'**au moins une section de surface (22", 36, 46, 56) de la section de transition (20", 35, 44, 54) et une section de face frontale (14) du capteur à ultrasons (6) qui lui est limitrophe se mêlent l'une dans l'autre dans l'alignement.

5. Porte-capteur (8, 27, 33, 43) selon l'une des revendications précédentes, **caractérisé en ce qu'**au moins une section de surface (22', 30', 30", 36, 46, 56) de la section de transition (20', 28', 28", 35, 44, 54) et la section de surface du véhicule, notamment du pare-choc (2', 2"), qui lui est limitrophe se mêlent l'une dans l'autre dans l'alignement.

6. Porte-capteur (8, 27, 33, 43) selon l'une des revendications précédentes, **caractérisé en ce que** la section d'accueil (18) est configurée en forme de cylindre et notamment en forme de cylindre circulaire.

7. Porte-capteur (8, 27) selon l'une des revendications précédentes, **caractérisé en ce que** la section de transition (20', 28', 28") présente, en coupe à travers l'axe longitudinal (10) du porte-capteur (8, 27), une surface (22', 30', 30") configurée en forme d'arc de cercle, en forme de section conique et/ou en forme de tractrice.

8. Porte-capteur (27) selon l'une des revendications précédentes, **caractérisé en ce que** la section de transition (28") présente, en coupe à travers l'axe longitudinal (10) du porte-capteur (27), une surface (30") qui peut être décrite par une fonction exponentielle.

9. Porte-capteur (33, 43) selon l'une des revendications précédentes, **caractérisé en ce que** la section de transition (35, 44, 54) présente, en coupe à travers l'axe longitudinal (10) du porte-capteur (33, 43), des sections de surface (38 et 40, 48 et 50, 58 et 60) ayant des courbures différentes qui se mêlent l'une dans l'autre en continu.

10. Porte-capteur (8, 27, 33, 43) selon l'une des revendications précédentes, **caractérisé en ce que** la section de transition (20', 20", 28', 28", 35, 44, 54) présente une surface fermée (22', 22", 30', 30", 36, 46, 56).

11. Porte-capteur (27) selon l'une des revendications précédentes, **caractérisé en ce que** la section d'accueil (18) et la section de transition (28', 28") sont disposées de manière concentrique l'une par rapport à l'autre.

12. Porte-capteur (8) selon l'une des revendications 1 à 10, **caractérisé en ce que** la section d'accueil (18) et la section de transition (20', 20") présentent des axes centraux (10, 24) décalés l'un par rapport à l'autre et/ou qui se croisent.

13. Porte-capteur (8, 27, 33, 43) selon l'une des revendications précédentes, **caractérisé en ce que** le porte-capteur (8, 27, 33, 43) est réalisé en matière plastique.

14. Unité de détection à ultrasons (4) comprenant un capteur à ultrasons (6) et un porte-capteur (8, 27, 33, 43) selon l'une des revendications précédentes, le capteur à ultrasons (6) pouvant être disposé dans le porte-capteur (8, 27, 33, 43).
